# EUROPEAN PATENT APPLICATION

(11) **EP 4 761 066 A1**
(43) Date of publication of application: **17.06.2026**
(21) Application number: 25218411.4
(22) Date of filing: 25.11.2025
(51) Int. Cl.: H02K 1/20, H02K 1/32, H02K 9/19

(54) **ELECTRIC MACHINE STATOR PROVIDED WITH A COOLING CIRCUIT**

(30) Priority: 12.12.2024 IT 202400028347
(71) Applicant: FPT Industrial S.p.A., 10156 Torino (IT)
(72) Inventor: VASANI, Ketankumar, 9320 Arbon (CH); BESRI, Abdelhadi, 9320 Arbon (CH)
(74) Representative: Fiume, Orazio

(57) **Abstract**

An electric machine (EM) comprising a housing (H) defining an accommodation space, provided with an oil inlet (IN) communicating with the accommodation space; a stator core (ST) defining a rotation axis (X) arranged in the accommodation space, comprising oil flow guide disk (D) arranged in an intermediate position of the stator along the rotation axis, wherein the oil flow guide disk includes annular oil channels (G1, G2) for directing oil received by the inlet (IN) in axial channels (XC1, XC2) defined in the stator core; wherein the axial oil channels are arranged in two or more groups (G1, G2) according to a relating radial position in the stator core, wherein the oil flow guide disk (D) is designed to connect the two or more groups in parallel between each other, such that oil flows only from the flow guide disk (D) towards end faces (EF1, EF2) of the stator core and wherein the axial channels are open at the opposite end faces of the stator core (ST).

## Description

### Field of the invention

The present invention relates to an electric machine with a cooling circuit.

### Description of the prior art

The cooling efficiency of an electric machine has a relevant impact on its power density, and on its weight. In the automotive field, the power density is an essential feature.

EP4325700 attempts to improve the heat dissipation capability of the stator to meet high power density requirements without the drawbacks of the existing methods. The solution proposed is based on an oil inlet arranged in the middle of the axial extension of the housing. A ringshaped iron core is arranged in the housing and comprises longitudinal slots where the windings are arranged.

In the core, axial channels are arranged, communicating with a corresponding radial channel, which in turn communicate with the oil inlet of the housing.

EP4325700 discloses three groups of axial channels: a first group is arranged far from the slots and proximal to the housing, a second group is arranged between the slots and a third group is arranged between the windings arranged in the slots and a spacer, having substantially a cylindrical shape, enslaved on the inner surface of the core.

The channels of the three groups are communicating such that the oil flow from the first cooling channel to the second and then to the third one.

In other words, one channel of the first group is in series with one channel of the second group, which, in turn, is in series with a channel of the third group. This configuration is clear looking at figure 8 of EP4325700.

The present applicant believes that the such a solution can be improved.

### Summary of the invention

The main object of the present invention is to provide a stator provided with a redesigned cooling circuit capable to permit a further increase of the power density.

The main concept of the invention is to implement two or more groups of channels, similar to those described in EP4325700, where, contrary to the teaching of EP4325700, the channel groups are arranged in parallel rather than in series. In addition, the channel groups are open at the ends of the stator, in such a way that the oil moving from the middle of the stator to the ends the stator, falls over the terminal portion of the windings. Then, the oil is collected in the housing.

Therefore, according to the present invention, no endplate is implemented, because the oil has not to change direction once the ends of the stator are reached.

On the contrary, oil exits outside the stator to reach the terminal portion of the windings.

More in particular, no channel is defined by means teeth-winding-spacer sleeve according to the third group disclosed by EP4325700.

A flow guide disc enables oil, similarly to EP4325700, to direct the oil in the channel groups, but it is arranged in order to supply all the channel groups in parallel.

Preferably, at least one of the channel groups includes channels defined by the inner portions of the slots and the relating windings to be cooled, so as to guide oil in direct exposure to heat sources.

According to a preferred embodiment of the invention one of the two or more channel groups outflow in an annular reservoir provided with openings working as nozzles to direct oil towards the far ends of the terminal windings.

This solution is particular advantageous because the possibility to collect oil pressurized and to eject it through calibrated openings permits to improve the distribution of the oil in the far ends of the terminal windings. In contrast, according to EP4325700, the terminal windings are not exposed to the oil.

Preferably, the channel group close to the housing outflow in the reservoir to be ejected on the terminal portion of the windings.

Therefore, the present invention aims at cooling not only the windings within the slots but also their terminals which are outside the core of the stator.

According to a preferred aspect of the invention, even the rotor is cooled in a similar way by means a hollow shaft and a flow guide disk distributing oil by means of oil channels.

Preferably, even the oil channels of the rotor are supplied with oil in parallel.

These and further objects are achieved by means of the attached claims, which describe preferred embodiments of the invention, forming an integral part of the present description.

### Brief description of the drawings

The invention will become fully clear from the following detailed description, given by way of a mere exemplifying and non limiting example, to be read with reference to the attached drawing figures, wherein:
- Fig. 1 shows a longitudinal section of an electric machine including the stator of the present invention;
- Fig. 2 discloses the same section of figure 1, seen according to a perspective view in such a way to better disclose the area around the winding terminals;
- Fig. 3 discloses a perspective view of a cross-section of the stator of the preceding features, where the cross-section is realized at the oil guide disk;
- Fig. 4 discloses a front view of the same oil guide disk of figure 3, being a cross-section A-A of figure 1;

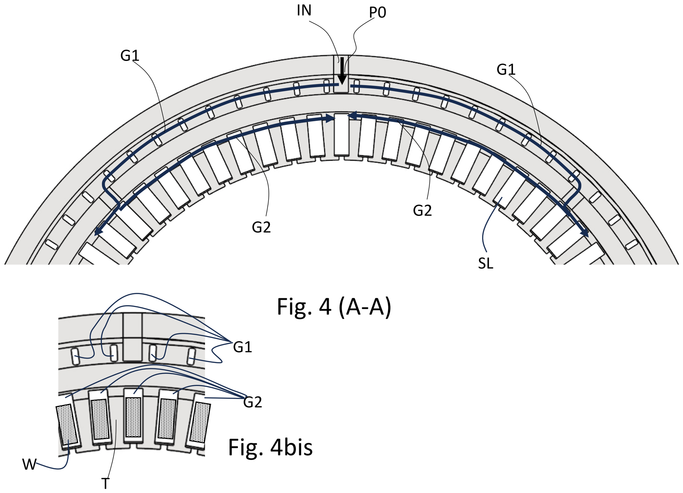

- Figure 4 bis discloses a portion of figure 4, where the slots are filled with the winding conductors;

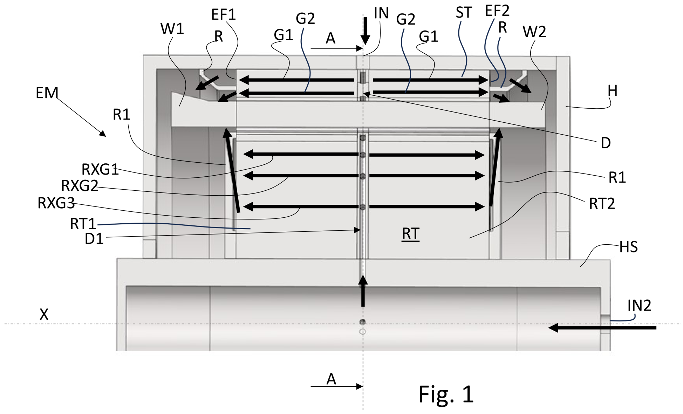

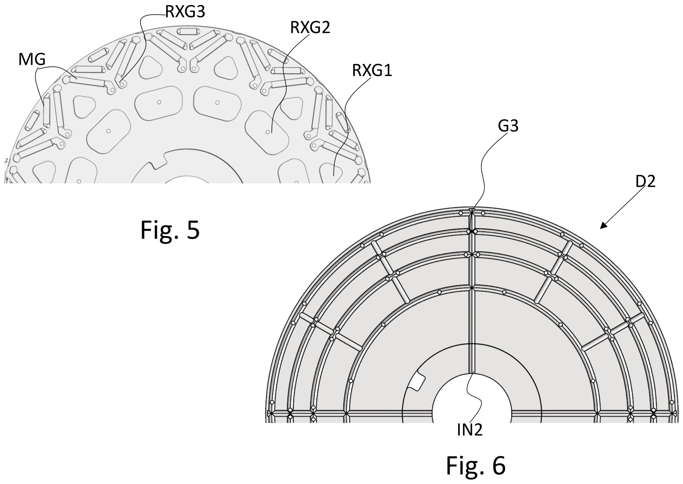

- Figs. 5 and 6 disclose two front views of cross sections at different positions of the rotor of the electric machine of figure 1.

The same reference numerals and letters in the figures designate the same or functionally equivalent parts.

According to the present invention, the term "second element" does not imply the presence of a "first element", first, second, etc.. are used only for improving the clarity of the description and they should not be interpreted in a limiting way.

### Detailed description of the preferred embodiments

As in the known electric machines, the present solution includes a stator ST arranged in a housing H.

The Stator has a cylindrical shape with end faces EF1, EF2, corresponding to the bases of a virtual cylinder.

As usual, at the end faces of the stator the terminal portions W1, W2 of the windings are present to define the electrical poles of the machine.

The stator can be defined by punching sheets packed together defining teeth T and corresponding slots where to arrange the windings therein.

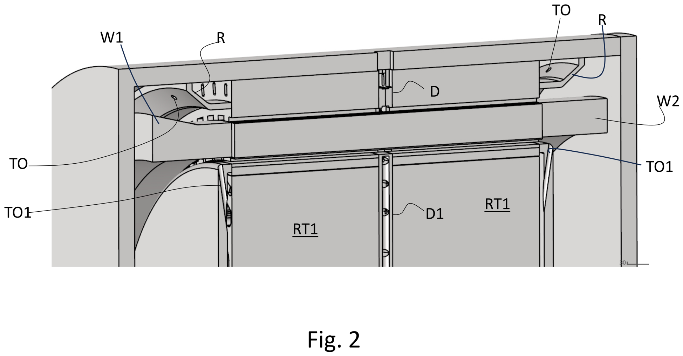

The machine has an oil inlet IN, see figs. 1 and 2, defined in the housing and is responsible for directing coolant into the stator.

The stator is provided with multiple axial oil channels to cool the heat generated by the stator windings and stator core.

The axial channels are arranged forming several groups of channels distributed around corresponding circumferences having the longitudinal development axis X as central axis, see Fig. 1.

The number of groups of axial channels depends on back iron space availability and designer's choices.

As disclosed in EP4325700, the inlet is arranged in an intermediate portion of the longitudinal development X of the housing and preferably in the middle position.

The axial direction X is parallel to the longitudinal development of the housing and corresponds to the rotation axis X of the rotor of the machine. Therefore, the X axis can be appealed as development axis or rotation axis according to the context.

According to the present invention an oil flow guide disk D is arranged in the packing of the stator core to introduce the oil coming from the inlet IN in the multiple axial oil channels.

Preferably, the oil is introduced radially within the guide disk D, having annular shape.

In the following the oil flow guide disk is appealed as "guide disk".

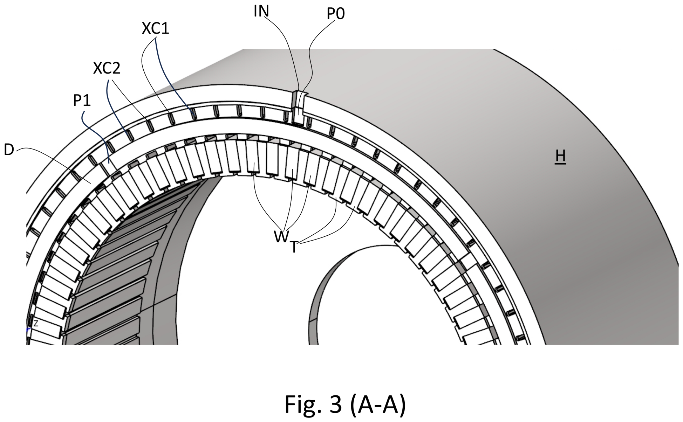

The inlet IN communicates with the first radial passage P0 of the guide disk D, see figure 3. The first radial passage P0 communicate with a first annular channel G1 of the guide disk, which is the closest annular channel to the housing.

This first annular channel G1 communicates with a plurality of axial channels XC1 defining a first group of axial channels. All the axial channel belonging to the same group share the same radial distance from the rotation axis X.

For convenience, each group of axial channels is identified with the same sign, assigned to the corresponding annular channel of the guide disk D.

Therefore, the first group G1 of axial channels XG1, is supplied with oil by the annular channel G1 of the guide disk D.

The axial channels of each group are uniformly distributed around the rotation axis X.

In addition, the first radial passage P0 communicates even with a second radial passage P1 to provide oil flow to a second annular channel G2, arranged between the first annular channel and the teeth T defining the slots S to accommodate the windings W.

The second radial passage P1 can be aligned with the first radial passage communicating directly with the first radial passage or shifted angularly as disclosed in the figs. 3 and 4, communicating indirectly with said first radial passage, through the first annular channel G1. Annular passage G1 and G2 are connected with at least one radial passage P1.

These channels facilitate the flow of coolant, enhancing heat dissipation within the stator.

Figure 4bis discloses a portion of figure 4 in detail. In particular, it is clear that the second group G2 of oil channels is defined in the inner portion of the slots confined by two consecutive teeth T and the wire W of the stator windings.

The stator slot wedge sits between the bottom of the slot winding and tooth, effectively containing the coolant within the slot and preventing leakage into the air gap.

Figure 5 represents two cross-sections at different axial positions of the rotor RT of the electric machine, which is mounted on a hollow shaft HS. The rotor is constructed from two interconnected cylindrical sections RT1, RT2, joined by a transversal interface. This interface features a second oil flow guide disk D2, equipped with multiple oil passages. These passages supply oil to various groups of axial oil channels RXG1, RXG2, RXG3 defined within the rotor, ensuring thorough cooling of rotor core and magnets, see Figs 5 and 6.

In the rotor, the oil first enters axially, then it proceeds radially at the second oil flow guide disk, then it proceeds axially through the above various groups.

The axial oil channels defined in the rotor are connected in parallel between each other, similarly to the stator ones, to conduct oil from the second guide disk to the ends of the rotor.

According to a preferred embodiment of the invention, the rotor further includes second reservoirs R1 arranged at the ends of the rotor to collect oil flowing from the rotor axial oil channels.

This second reservoir includes through openings TO1 arranged to eject the collected oil towards the end terminal W1, W2 of the of the winding wires W of the stator.

In particular an ejection direction is incident with the end terminal W1, W2.

Therefore, if one considers that the end terminal windings W1, W2 define a sort of rings protruding axially beyond the stator magnet core ST, the first reservoir R cools the ring from the outside, while the second reservoir R1 cools the ring from the inside. Thus, the ring is cooled on both the inner and outer faces.

It should be considered that the second reservoir is helped to cool the ring due to the centrifugal effect caused by the rotation of the rotor.

The hollow shaft acts as a conduit for oil flow, directing it into the rotor through the second oil flow guide disk D2. This arrangement allows for continuous circulation of coolant through the axial flow channels in both the stator and rotor, optimizing thermal management and maintaining operational efficiency.

In other words, the rotor acts as a rotatable nozzle.

### Function of the Invention

The electric machine operates by efficiently distributing oil through its structure, utilizing the strategically positioned oil inlet and guide disks. The oil flow guide disk in the stator core directs oil into axial channels, which are arranged in parallel groups to facilitate effective cooling. The oil is ejected towards the winding wires end terminals, ensuring uniform cooling across the stator.

According to another aspect of the invention, the rotor is equipped with a second oil guide disk D2, which receives oil through hollow shaft HS communicating with the guide disk D2 by means of a radial inlet IN2, and distributes it across various channel groups RXG1, RXG2, RXG3 arranged in the rotor, similarly to the stator configuration, by means of channels G3, substantially radial, arranged in the second oil guide disk D2. This comprehensive oil distribution system enhances the machine's performance by maintaining optimal thermal conditions, and extending the operational life of the components.

Many changes, modifications, variations and other uses and applications of the subject invention will become apparent to those skilled in the art after considering the specification and the accompanying drawings which disclose preferred embodiments thereof as described in the appended claims.

Further implementation details will not be described, as the man skilled in the art is able to carry out the invention starting from the teaching of the above description.

## Claims

1. An electric machine (EM) comprising:
a housing (H) defining an accommodation space, provided with an oil inlet (IN) communicating with the accommodation space;
a stator core (ST) defining a rotation axis (X) arranged in the accommodation space and comprising an oil flow guide disk (D), annular, arranged in an intermediate position of the stator along the rotation axis, wherein the oil flow guide disk includes annular oil channels (G1, G2) for directing oil received by the inlet (IN) in axial channels (XC1, XC2) defined in the stator core;
wherein the axial oil channels are arranged in two or more groups (G1, G2) according to a relating radial position in the stator core,
wherein the oil flow guide disk (D) is designed to connect the two or more groups in parallel between each other, such that oil flows only from the flow guide disk (D) towards end faces (EF1, EF2) of the stator core and wherein the axial channels are open at the opposite end faces of the stator core (ST).

2. Electric machine according to claim 1, wherein the oil inlet (IN) is arranged in an intermediate position of longitudinal development (X) of the housing.

3. Electric machine according to claim 1 or 2, wherein the axial oil channels of one of the two or more groups are located in inner portions of stator slots (T) and bounded by windings wires (W).

4. Electric machine according to any of the previous claims, wherein the channels of different two or more groups are opened at said end faces in such a way to eject oil towards different portions of end terminals (W1, W2) of the windings wires (W).

5. Electric machine according to any of the previous claims further comprising a reservoir (R) in at least one of the end faces (EF1, EF2) arranged to collect oil from at least one of the groups of axial oil channels and through openings (TO) arranged to eject the collected oil towards a far portion of an end terminal (W1, W2).

6. Electric machine according to any one of the preceding claims 1 - 5, wherein said guide disk defines
- a first radial passage (P0), communicating with said oil inlet (IN) and communicating with
- a first annular channel (G1) of the guide disk, which is a closest annular channel to the housing.

7. Electric machine according to claim 5 and 6, wherein said first annular channel (G1) communicate with a first group of axial oil channels (XG1) and said reservoir (R) communicates with said first group (G1) of axial oil channels (XG1).

8. Electric machine according to claims 6 or 7, wherein said first radial passage (P0) communicates with a second radial passage (P1) arranged to provide oil to a second annular channel G2, wherein the second radial passage (P1) is aligned with the first radial passage communicating directly with the first radial passage or shifted angularly, communicating indirectly with said first radial passage, through the first annular channel (G1).

9. Electric machine according to any one of the previous claims, further comprising a rotor (RT) enslaved on a hollow shaft (HS), wherein, the rotor has a cylindrical shape formed by a first cylinder (RT1) and a second cylindrical (RT2) reciprocally interconnected through a transversal interface, wherein said interface is defined by a second oil guide disk (D2).

10. Electric machine according to claim 9, wherein said hollow shaft includes a second inlet (IN2) to radially communicate with the second oil guide disk (D2) and the second oil guide disk includes a plurality of oil passages (G3) arranged to supply with oil to two or more groups (RXG1, RXG2, RXG3) of axial oil channels defined in the rotor.

11. Electric machine according to claim 10, wherein axial oil channels defined in the rotor are connected in parallel between each other to conduct oil from the second guide disk (D2) to the ends of the rotor.

12. Electric machine according to claim 11, wherein the rotor further includes second reservoirs (R1) arranged at the ends of the rotor, to collect oil flowing from the axial oil channels and including through openings (TO1) arranged to eject the collected oil towards the end terminal (W1, W2) of the of the windings wires (W) of the rotor.
